# EUROPÄISCHE PATENTSCHRIFT

(11) **EP 1 996 384 B1**
(45) Veröffentlichungstag und Bekanntmachung des Hinweises auf die Patenterteilung: **16.03.2011**
(21) Anmeldenummer: 07721854.3
(22) Anmeldetag: 24.01.2007
(51) Int. Cl.: B29C 49/22, B29C 49/04

(54) **VERFAHREN UND VORRICHTUNG ZUR HERSTELLUNG EINES BEHÄLTERS**
METHOD AND DEVICE FOR PRODUCING A CONTAINER
PROCÉDÉ ET DISPOSITIF DE FABRICATION D'UN CONTENANT

(30) Priorität: 16.03.2006 DE 102006012487
(43) Veröffentlichungstag der Anmeldung: 03.12.2008
(73) Patentinhaber: GAPLAST GmbH, D-82442 Altenau (DE)
(72) Erfinder: KNEER, Stephan, 82490 Farchand (DE)
(74) Vertreter: Flosdorff, Jürgen
(86) Internationale Anmeldenummer: PCT/DE2007/000117
(87) Internationale Veröffentlichungsnummer: WO 2007/104274

(56) Entgegenhaltungen:
- DE-A1- 19 626 967
- DE-A1- 19 626 968
- JP-A- 8 175 568

## Beschreibung

Die Erfindung betrifft ein Verfahren zur Herstellung eines Behälters, der einen im wesentlichen steifen Außenbehälter und einen leicht verformbaren Innenbeutel enthält, die aus thermoplastischen Kunststoffen bestehen, die keine Schweißverbindung miteinander eingehen, wobei der Behälter eine Behälteröffnung und der Außenbehälter wenigstens eine Wandöffnung hat, durch die ein Druckausgleich in dem Zwischenraum zwischen dem Innenbeutel und dem Außenbehälter erfolgt, wenn sich der Innenbeutel infolge der Abgabe seines Inhalts zusammenzieht. Bei dem Verfahren wird ein aus wenigstens zwei Schläuchen bestehender Vorformling koextrudiert und zwischen den geöffneten Hälften einer Blasform angeordnet, wobei die Blasform geschlossen wird, wenn der Vorformling die zur Herstellung des Behälters erforderliche Länge hat. Dabei wird Überschußmaterial im Bodenbereich des herzustellenden Behälters abgequetscht und vorzugsweise ein nach außen vorstehender Steg aus verschweißtem Material des Außenbehälters ausgebildet, in dem die verschweißte Bodennaht des Innenbeutels eingeklemmt und in axialer Richtung gehalten ist. Danach wird der Vorformling durch ein Druckmedium, im allgemeinen Druckluft, zur Anlage an die Wandung der Blasform aufgeblasen und aus der Blasform entnommen.

Ein derartiges Verfahren ist beispielsweise aus der DE 196 26 967 C2 bekannt. In dieser Druckschrift ist außerdem offenbart, daß die wenigstens eine Wandöffnung dadurch ausgebildet wird, daß die Wand des Außenbehälters von einem Bohrer, Stichel oder einer Einstechnadel durchbohrt oder durchstochen wird, wobei nach vollständiger Durchdringung der Wand des Außenbehälters ein Druckmedium gegen die Wand des Innenbeutels geblasen oder gespritzt wird, um diesen zurück zu drücken, damit er durch den Bohrer oder die Einstechnadel nicht beschädigt wird. Bei dem Druckmedium kann es sich um Luft, Gas, Wasser oder ein Gel handeln.

Die verschiedenartigen thermoplastischen Kunststoffe des Außenbehälters und des Innenbeutels gehen zwar keine Schweißverbindung miteinander ein, sie haften aber aneinander, wenn der Behälter nach dem oben beschriebenen Verfahren im Koextrusionsverfahren hergestellt wird. Bevor ein derartiger Behälter verwendungsfähig ist, d.h. mit einem flüssigen oder beispielsweise auch gelförmigen Behälterinhalt gefüllt wird, der dann beispielsweise mittels einer Airlesspumpe oder im Falle eines Squeeze-Behälter durch dessen Zusammendrücken allmählich abgegeben wird, muß der Innenbeutel wenigstens weitgehend von der Wand des Außenbehälters abgelöst und dann wieder an diese angelegt werden. Dies geschieht bisher in der Weise, daß durch die Behälteröffnung ein Unterdruck bzw. Vakuum auf den Innenbeutel aufgebracht wird, der sich daraufhin schlagartig zusammenzieht. Dabei löst sich der Innenbeutel, der mit seiner Bodennaht in den Bodensteg des Außenbehälters eingeklemmt ist, mehr oder weniger unkontrolliert von dem Außenbehälter, wobei es beispielsweise vorkommen kann, daß sich der Innenbeutel nur an einer Seite ablöst. Anschließend wird durch die Behälteröffnung ein Druckmedium, im allgemeinen Druckluft, in den Innenbeutel eingeführt, um diesen wieder an den Außenbehälter anzulegen, damit der Innenbeutel das vorgesehene Füllvolumen hat. Wenn der Behälter dabei eine Flaschenform hat mit einem Hals, der über Schulterabschnitte in den beispielsweise zylindrischen Körper des Außenbehälters übergeht, ist es nach der bekannten Vorgehensweise oft unvermeidlich, daß im Übergangsbereich der Schulter zum Hauptkörper des Außenbehälters Luft zwischen dem Außenbehälter und dem Innenbeutel eingeschlossen wird, die nicht mehr entweichen kann. Dies tritt auch dann auf, wenn der Körper des Außenbehälters nicht geradlinig, beispielsweise zylindrisch verläuft, sondern Ein- und Ausbuchtungen hat.

Wenn der Innenbeutel nicht weitgehend gleichmäßig von der Wand des Außenbehälters abgelöst wurde, tritt trotz Druckausgleichsöffnungen in der Wand des Außenbehälters in dem Innenbeutel als Folge der Abgabe von Füllmaterial ein verhältnismäßig großer Unterdruck auf. Je größer dieser Unterdruck ist, um so größer ist die Permeation durch die Wand des Innenbeutels und die Gefahr, daß dieser undicht wird. Wenn der Unterdruck in dem Innenbeutel zu groß wird, kann dies auch die Funktionsunfähigkeit der meist vorgesehenen Pumpe mit sich bringen, so daß nicht der gesamte Behälterinhalt abgegeben werden kann. Es kann auch passieren, daß der Unterdruck anfangs so groß wird, daß sich Außen- und Innenflasche gleichzeitig falten, bis der Unterdruck einen Wert erreicht hat, der es dem Innenbeutel erlaubt, sich schlagartig abzulösen.

JP 08175568 A offenbart einen aus einem starren Außenbehälter und einem weichen Innenbeutel bestehenden Behälter, der am Boden abgequetscht ist. Der Innenbeutel wird aus dem Klemmsitz der Bodennaht befreit, wodurch sich hier eine schlitzförmige Öffnung in dem Außenbehälter bildet. Anschließend werden mit Hilfe speziell geformter Bohrer zwei einander gegenüberliegende Löcher im Halsbereich durch den Außenbehälter gebohrt. Durch die so ausgebildeten Löcher im Halsbereich und durch die schlitzförmige Bodenöffnung wird dann Druckluft eingeblasen, die den Innenbeutel von der Wand des Außenbehälters löst. Anschließend wird Druckluft in den Innenbeutel eingeführt, die den Innenbeutel bis zu einem Ausmaß von 60 bis 80%, am besten 70 bis 75, wieder an den Außenbehälter anlegt. Der Innenbeutel wird nicht vollständig an die Innenwand des Außenbehälters angedrückt, damit der Innenbeutel nicht wieder in die schlitzförmige Bodenöffnung des Außenbehälters eintritt. In diesem Stadium verbleibt demnach viel Luft zwischen dem Innenbeutel und dem Außenbehälter. Anschließend wird durch Heißsiegeln der Boden des Außenbehälters verschlossen. Nach diesem Heißsiegel-Schritt wird wieder Druckluft ins Innere des Innenbeutels eingeführt, wodurch die restliche Luft zwischen dem Innenbeutel und dem Außenbehälter durch die beiden Löcher im Halsbereich verdrängt werden soll.

Der vorliegenden Erfindung liegt die Aufgabe zugrunde, ein Verfahren der eingangs genannten Art so weiter zu entwickeln, daß der Innenbeutel auf kontrollierte Weise und möglichst gleichmäßig von dem Außenbehälter abgelöst und weitestgehend ohne Einschluß von Luft (oder einem anderen Druckmedium) zwischen der Innenwand des Außenbehälters und dem Innenbeutel wieder an den Außenbehälter angelegt werden kann.

Außerdem soll eine Vorrichtung angegeben werden, mit dem Behälter mit diesen Eigenschaften herstellbar sind.

Diese Aufgaben werden erfindungsgemäß durch die Merkmale der Patentansprüche 1 und 9 gelöst.

Vorteilhafte Ausgestaltungen der Erfindung sind in den abhängigen Ansprüchen gekennzeichnet.

Das erfindungsgemäße Verfahren sieht nach Herstellung des Behälters in der Blasform und dessen Entnahme folgende Schritte vor, die bevorzugt in der erfindungsgemäßen Vorrichtung durchgeführt werden:
a) Die Behälteröffnung wird abgedichtet, was vorzugsweise durch einen Stopfen erfolgt, der in die Behälteröffnung, meist einen Behälterhals, dicht eingedrückt wird. Danach wird auf an sich bekannte Weise die wenigstens eine Wandöffnung dadurch ausgebildet, daß die Wand des Außenbehälters von einem Bohrer oder einer Einstechnadel durchbohrt oder durchstoßen wird, wobei nach vollständiger Durchdringung der Wand des Außenbehälters ein Druckmedium, vorzugsweise Druckluft, in den Zwischenraum zwischen dem Behälter und dem Innenbeutel eingeführt wird. Das Druckmedium wird dabei vorzugsweise aus einem Kanal am Kopfende des Bohrers oder der Einstechnadel ausgestoßen und gegen den gegenüberliegenden Bereich des Innenbeutels geblasen, der durch das unter hohem Druck stehende Medium zurückgedrückt wird. Hierdurch erhöht sich der Innendruck in dem Innenbeutel. Der Druck in dem Innenbeutel wird vorzugsweise durch einen darin angeordneten Drucksensor erfaßt. Wenn ein vorbestimmter erster Druckschwellwert, der vorzugsweise in der sehr kleinen Größenordnung von etwa 0,05 bar liegt, erreicht ist und von dem Sensor erfaßt wird, wird durch eine Steuereinrichtung sofort der Vorschub des Bohrers oder der Einstechnadel gestoppt, so daß eine Beschädigung der Wand des Innenbeutels sicher vermieden ist. Das Einführen des Druckmediums in den Zwischenraum zwischen dem Außenbehälter und dem Innenbeutel setzt sich fort, bis in dem Innenbeutel ein vorbestimmter zweiter Druckschwellwert erfaßt wird, der anzeigt, daß sich der Innenbeutel in dem gewünschten Ausmaß und bis zu der vorgesehenen Behälterhöhe von dem Außenbehälter gelöst hat. Bei Erreichen des zweiten Druckschwellwertes, der beispielsweise 0,15 bar betragen kann, wird das Einführen des Druckmediums in den Zwischenraum zwischen dem Außenbehälter und dem Innenbeutel gestoppt:

Während der erste Druckschwellwert so niedrig festgelegt wird, daß er praktisch dem ersten meßbaren Druckanstieg in dem Innenbeutel entspricht, der anzeigt, daß der Bohrer oder die Einstechnadel oder ein entsprechendes Werkzeug die Wand des Außenbehälters durchdrungen hat, wird der zweite Druckschwellwert in Abhängigkeit von der Behältergröße, der Behälterform, dem verwendeten Material etc. so festgelegt, daß eine optimale Ablösung des Innenbeutels erfolgt.

Wenn der Behälter beispielsweise scharfwinklige Kanten hat, wie sie bei breiten Schulterbereichen einer Flasche auftreten können, insbesondere dann, wenn die Schulterbereiche im rechten Winkel zur Umfangswand des Behälters verlaufen, oder wenn der Behälter Ausbuchtungen oder Einschnürungen aufweist, bei denen die Gefahr besteht, daß dort Luft eingeschlossen wird, wenn der weiter nach oben abgelöste Innenbeutel wieder an die Behälterwand angedrückt wird, dann wird der zweite Schwellwert in einer solchen Höhe festgelegt, daß der Ablösevorgang vor Erreichen der kritischen Bereiche gestoppt wird. Der zugehörige Druckschwellwert läßt sich durch entsprechende Versuche ermitteln. Der zweite Schwellwert ist demnach stets auf den jeweiligen Behältertyp abzustimmen.

Wenn das Einführen des Druckmediums in den Zwischenraum zwischen dem Außenbehälter und dem Innenbeutel gestoppt und damit der Ablösevorgang beendet ist, wird der genannte Zwischenraum druckentlastet, indem zweckmäßigerweise der Bohrer oder die Einstechnadel aus dem Loch in der Wand zurückgezogen wird.

In einer bevorzugten Ausführungsform des Verfahrens werden die Schritte b) bis d) zweimal durchgeführt, indem bevorzugt zu beiden Seiten einer Ebene, die die Bodennaht und die Mittelängsachse des Behälters enthält, eine Wandöffnung ausgebildet und dort das Druckmedium eingeführt wird. Dabei liegt es im Rahmen der Erfindung, daß zu beiden Seiten der Ebene auch mehr Wandöffnungen ausgebildet und die erfindungsgemäßen Schritte entsprechend oft angewendet werden können.

Dabei können die Wandöffnungen praktisch an jedem Bereich des Außenbehälters ausgebildet werden, beispielsweise am Boden, wobei sich zweckmäßigerweise die beiden Wandöffnungen bzw. Löcher auf einer Linie gegenüberliegen, die die Bodennaht halbiert und im rechten Winkel zu dieser verläuft. Die Ausbildung der Wandöffnungen etwa auf halber Höhe in der Umfangswand des Außenbehälters ist dann besonders zweckmäßig, wenn es sich um einen Squeeze-Behälter handelt, bei dem der Behälterinhalt nicht durch eine Airlesspumpe, sondern durch Zusammendrücken des Außenbehälters abgegeben wird, Dabei können die zwei Wandöffnungen von den Fingern des Benutzers verschlossen werden, um das Ausbringen des Behälterinhalts zu erleichtern.

Natürlich können die Behälteröffnungen auch im Schulterbereich ausgebildet sein.

Mit besonderem Vorteil ist vorgesehen, daß die erfindungsgemäßen Schritte b) bis d) nacheinander erst an einer Wandöffnung durchgeführt werden, und daß danach diese Schritte für die bzw. an der anderen Wandöffnung erfolgen.

Wenn der Innenbeutel nach Beendigung der Verfahrensschritte b) bis d) an allen Wandöffnungen in dem gewünschten Maß abgelöst worden ist, wird nach Druckentlastung des Zwischenraums zwischen dem Außenbehälter und dem Innenbeutel ein Druckmedium in den Innenbeutel durch die Behälteröffnung, beispielsweise durch den Stopfen im Flaschenhals hindurch, eingeführt, um den von der Behälterwand abgelösten Innenbeutel wieder an diese anzulegen. Hierzu wird mit großem Vorteil vorgeschlagen, daß ein vorbestimmtes Volumen eines unter einem vorbestimmten Druck stehenden Mediums in den Innenbeutel eingeführt wird, indem eine vorgespannte Drückluftquelle durch Öffnen eines Ventils mit dem Innenraum des Innenbeutels verbunden wird, und daß der hierdurch in dem Innenbeutel erzeugte Druck gemessen wird. Dieser Meßwert des Drucks steht in Korrelation zu dem Füllvolumen des Innenbeutels und zeigt, ob sich dieser - wie vorgesehen - vollständig an den Außenbehälter angelegt hat oder ob Lufteinschlüsse das Füllvolumen verringert haben, wodurch (bei Überschreitung einer zugehörigen Toleranzgrenze) der Behälter unbrauchbar wäre.

Weiter ist vorgesehen, daß der zeitliche Verlauf dieses Innendrucks gemessen wird, wobei dies anzeigt, ob der Innenbeutel dicht ist.

Diese Qualitätskontrolle der Volumenprüfung und der Dichtigkeitsprüfung werden in der erfindungsgemäßen Vorrichtung an jedem Behälter vorgenommen und stellen einen wichtigen Aspekt der vorliegenden Erfindung dar.

In weiteren Einzelheiten wird vorgeschlagen, daß in der Blasform im Bereich der vorgesehenen Wandöffnungen jeweils eine Ausbauchung des Außenbehälters ausgebildet wird, z,B. in Form eines flachen Kugelabschnitts mit einer entsprechenden inneren Einbuchtung, an der der Innenbeutel anliegt. Wenn der Bohrer senkrecht oder in einem schrägen Winkel zur Wandfläche diesen kugelkappenförmigen Wandabschnitt durchbohrt hat und das Druckmedium gegen den ebenfalls kugelkappenförmigen Abschnitt des Innenbeutels geblasen wird, klappt der letztere Abschnitt schlagartig nach innen um, wodurch eine Berührung mit dem Bohrwerkzeug oder Stichel sicher vermieden ist.

Die erfindungsgemäße Vorrichtung enthält bevorzugt zwei getrennte Bohrstationen mit kontrolliertem Antrieb und kontrolliertem schnellen Vorhub, wobei der Anstellwinkel der Bohrwerkzeuge sowie deren Position einstellbar sind.

Nach einem weiteren vorteilhaften Gesichtspunkt der Erfindung ist vorgesehen, daß im Anschluß an Schritt a) d.h. nach dem Abdichten der Behälteröffnung mittels eines geeigneten Stopfens, Druckluft in den Innenbeutel eingeführt wird, wobei ein Druck aufgebaut wird, der kleiner als der Druck des in den Zwischenraum zwischen dem Außenbehälter und dem Innenbeutel eingeführten Mediums ist. Dieser Gegendruck wirkt als Puffer, der verhindert, daß der Innenbeutel durch die in den Zwischenraum zwischen dem Außenbehälter und dem Innenbeutel eingeführte Druckluft auf unerwünschte Weise beispielsweise über eine Kante des Behälters hinaus nach oben "weggeschossen" wird. Durch den Gegendruck in dem Innenbeutel erfolgt das Ablösen auf besonders kontrollierte, gleichmäßige Weise. Dabei kann der Innendruck mit zunehmender Ablösung des Innenbeutels und damit einhergehender Volumenverringerung z.B. durch ein geeignetes Ventil entlastet bzw. verringert werden, was aber nicht unbedingt der Fall sein muß. Nach Aufbau des Gegendrucks wird der Drucksensor zweckmäßigerweise auf Null gestellt.

Das Ablösen des Innenbeutels erfolgt demnach in vorzugsweise zwei getrennten Zyklen, die mit denselben oder unterschiedlichen Druckschwellwerten arbeiten, die vor Durchführung des Verfahrens festzulegen sind.

Die Dichtstopfen, die zweckmäßigerweise zum Abdichten der Behälteröffnung verwendet werden, haben bevorzugt je eine Bohrung für einen im Innenbeutel befindlichen Sensor bzw. dessen Leitung und für ein Luftgegendruck-Ventil, durch das die Druckluft in den Innenbeutel eingeführt wird. Der als Puffer wirkende Gegendruck kann - je nach Behälter - etwa bis zu 0,2 bar betragen. In einer alternativen Ausführungsform ist nur eine Öffnung mit einem Umschaltventil vorgesehen.

Die erfindungsgemäße Vorrichtung hat eine Behälterübernahmestation, die entweder manuell oder automatisch bestückt wird, oder mit der Blasmaschine in Verbindung steht. An einer Einlegestation werden die Behälter in einen Werkstückträger eingelegt, wobei beispielsweise vier Behälter in einer Reihe angeordnet werden, auf die ein Querjoch niederfährt, das die Behälter mit Dichtstopfen abdichtet. Die erfindungsgemäße Vorrichtung hat fernen zwei Bohrstationen, eine Station für die Volumenprüfung, eine Station für die Dichtigkeitsprüfung sowie bevorzugt eine Kamerastation zur Überprüfung der Dichtfläche sowie der Ablösehöhe und eine Spanabsaugungseinrichtung. Ferner ist am Ausgang der Vorrichtung eine Gut-Schlecht-Weiche für die Qualitätssicherung vorgesehen, wobei die Behälter als "schlecht" aussortiert werden, die die Volumen- und/oder Dichtigkeitsprüfung nicht bestanden haben und bei denen der zweite Druckschwellwert nicht erreicht wurde, so daß hier der Innenbeutel nicht ausreichend abgelöst worden ist.

Außerdem werden durch eine Datenerfassungseinrichtung der Vorrichtung die Druckwerte beim Bohren sowie bei der Volumen- und Dichtigkeitsprüfung erfaßt.

Als Materialien werden für den Außenbehälter beispielsweise PP, PET-G und Surlyn verwendet, während der Innenbeutel beispielsweise aus Lupolen oder Surlyn bestehen kann. Der Innenbeutel kann beispielsweise auch aus drei Schichten bestehen, z.B. EVOH, Haftvermittlerschicht, Surlyn oder Lupolen. Es versteht sich, daß diese Materialangaben nur beispielhaft und nicht beschränkend sind.

## Patentansprüche

1. Verfahren zur Herstellung eines Behälters bestehend aus einem im wesentlichen steifen Außenbehälter und einem leicht verformbaren Innenbeutel aus keine Schweißverbindung miteinander eingehenden thermoplastischen Kunststoffen, mit einer Behälteröffnung und wenigstens einer Wandöffnung in dem Außenbehälter, durch die ein Druckausgleich in dem Zwischenraum zwischen dem Innenbeutel und dem Außenbehälter erfolgt, wobei ein aus wenigstens zwei Schläuchen bestehender Vorformling coextrudiert und zwischen den geöffneten Hälften einer Blasform angeordnet wird und die Blasform geschlossen wird, wenn der Vorformling die zur Herstellung des Behälters erforderliche Länge hat, wobei Überschußmaterial im Bodenbereich des herzustellenden Behälters abgequetscht und ein Steg aus verschweißtem Material des Außenbehälters ausgebildet wird, in dem die verschweißte Bodennaht des Innenbeutels eingeklemmt und in axialer Richtung gehalten ist und der Vorformling durch ein Druckmedium zur Anlage an die Wandung der Blasform aufgeblasen und aus der Blasform entnommen wird,
enthaltend folgende Schritte:
a) die Behälteröffnung wird abgedichtet,
b) die wenigstens eine Wandöffnung wird **dadurch** ausgebildet, daß die Wand des Außenbehälters von einem Bohrer, Stichel oder einer Einstechnadel durchbohrt oder durchstochen wird, wobei nach vollständiger Durchdringung der Wand des Außenbehälters ein Druckmedium in den Zwischenraum zwischen dem Außenbehälter und dem Innenbeutel eingeführt wird, **gekennzeichnet durch** die Schritte:
c) der Vorschub des Bohrers, Stichels oder der Einstechnadel wird gestoppt, wenn in dem Innenbeutel ein vorbestimmter erster Druckschwellwert erreicht ist,
d) das Einführen des Druckmediums in den Zwischenraum zwischen dem Außenbehälter und dem Innenbeutel wird gestoppt, wenn in dem Innenbeutel ein vorbestimmter zweiter Druckschwellwert erreicht ist,
e) nach Druckentlastung des Zwischenraums zwischen dem Außenbehälter und dem Innenbeutel wird **durch** die Behälteröffnung ein Druckmedium in den Innenbeutel eingeführt, um den von der Behälterwand abgelösten Innenbeutel wieder an diese anzulegen.

2. Verfahren nach Anspruch 1,
**dadurch gekennzeichnet,**
**daß** zu beiden Seiten der durch die Bodennaht und die Mittellängsachse des Behälters verlaufenden Ebene jeweils wenigstens eine Wandöffnung ausgebildet wird.

3. Verfahren nach Anspruch 1 oder 2,
**dadurch gekennzeichnet,**
**daß** in der Blasform im Bereich der Wandöffnungen jeweils eine Ausbauchung des Außenbehälters ausgebildet wird mit einer Innenseite an der der Innenbeutel anliegt.

4. Verfahren nach einem der Ansprüche 1 bis 3,
**dadurch gekennzeichnet,**
**daß** die Schritte b) bis d) für jede Wandöffnung einzeln erfolgen, derart, daß der Innenbeutel zuerst an der einen Seite der durch die Bodennaht und die Längsmittelachse verlaufenden Ebene und dann an der anderen Seite abgelöst wird.

5. Verfahren nach einem der Ansprüche 1 bis 4,
**dadurch gekennzeichnet,**
**daß** die Druckschwellenwerte von einem Drucksensor erfaßt werden, der in dem Innenbeutel angeordnet wird.

6. Verfahren nach einem der Ansprüche 1 bis 5,
**dadurch gekennzeichnet,**
**daß** in dem Innenbeutel im Anschluß an Schritt a) ein Druck aufgebaut wird, der kleiner ist als der Druck des in den Zwischenraum zwischen dem Außenbehälter und dem Innenbeutel eingeführten Mediums.

7. Verfahren nach einem der Ansprüche 1 bis 6,
**dadurch gekennzeichnet,**
**daß** ein vorbestimmtes Volumen eines Druckmediums in den Innenbeutel eingeführt wird und daß der hierdurch erzeugte Druck in dem Innenbeutel gemessen wird.

8. Verfahren nach Anspruch 7,
**dadurch gekennzeichnet,**
**daß** der zeitliche Verlauf des Innendrucks gemessen wird, um einen eventuellen Druckabfall zu erfassen.

9. Vorrichtung zur Durchführung der Schritte a) bis e) des Anspruchs 1 sowie nach einem der Ansprüche 2 bis 8,
wobei
die Vorrichtung eine Behälterübernahmeeinrichtung, eine Behältereinlegeeinrichtung mit einem Werkstückträger, zwei Bohreinrichtungen mit Bohrern, die Kanäle enthalten, die mit einer Druckluftquelle in Verbindung stehen, eine Druckmeßeinrichtung und eine Einrichtung für eine Volumenprüfung und eine Dichtigkeitsprütung aufweist.

## Claims

1. A method of manufacturing a container consisting of a substantially rigid outer container and a readily deformable inner bag of thermoplastic plastic materials with no weld connection between them, with a container opening and at least one wall opening in the outer container, through which a pressure balance occurs in the space between the inner bag and the outer container, wherein a preform consisting of at least two tubes is coextruded and disposed between the opened halves of a blow mould and the blow mould is closed when the preform has the length necessary for manufacturing a container, wherein excess material in the base region of the container to be manufactured is squeezed away and a web of fused material of the outer container is formed, in which the fused base seam of the inner bag is clamped and is held in the axial direction and the preform is inflated by a pressure medium into engagement with the wall of the blow mould and is removed from the blow mould, including the following steps:
a) the container opening is sealed,
b) the at least one wall opening is formed by boring or piercing the wall of the outer container with a drill, piercer or a piercing needle, wherein after complete penetration of the wall of the outer container a pressure medium is introduced into the space between the outer container and the inner bag, **characterised by** the following steps:
c) the advance of the drill, piercer or the piercing needle is stopped when a predetermined first pressure threshold is reached in the inner bag,
d) the introduction of the pressure medium into the space between the outer container and the inner bag is stopped when a predetermined second pressure threshold is reached in the inner bag,
e) after releasing the pressure in the space between the outer container and the inner bag a pressure medium is introduced into the inner bag through the container opening in order to re-engage the inner bag, which has come free from the container wall, with it again.

2. A method as claimed in claim 1, **characterised in that** at least one wall opening is formed on each side of the plane extending through the base seam and the central longitudinal axis of the container.

3. A method as claimed in claim 1 or 2, **characterised in that** in the vicinity of the wall openings a respective bulge of the outer container is formed in the blow mould with an inner surface, which is engaged by the inner bag.

4. A method as claimed in one of claims 1 to 3, **characterised in that** the steps b) to d) occur individually for each wall opening such that the inner bag comes free firstly on the one side of the plane extending through the base seam and the central longitudinal axis and then on the other side.

5. A method as claimed in one of claimed 1 to 4, **characterised in that** the pressure threshold values are detected by a pressure sensor, which is disposed in the inner bag.

6. A method as claimed in one of claims 1 to 5, **characterised in that** following step a) a pressure is created in the inner bag which is smaller than the pressure of the medium introduced into the space between the outer container and the inner bag.

7. A method as claimed in one of claims 1 to 6, **characterised in that** a predetermined volume of a pressure medium is introduced into the inner bag and that the pressure thereby produced in the inner bag is measured.

8. A method as claimed in claim 7, **characterised in that** the variation of the internal pressure over time is measured in order to detect a potential pressure drop.

9. Apparatus for carrying out steps a) to e) of claim 1 and as claimed in one of claims 2 to 8 wherein the apparatus includes a container accepting device, a container inserting device with a workpiece carrier, two boring devices with drills, which include passages which are in communication with a source of pressurised air, a pressure measuring device and a device for checking the volume and for checking the leak tightness.

## Revendications

1. Procédé de fabrication d'un contenant se composant d'un contenant extérieur essentiellement rigide et d'un sachet intérieur légèrement déformable en matières thermoplastiques rentrant les unes dans les autres sans soudure, avec une ouverture de contenant et au moins une ouverture de paroi dans le contenant extérieur, par laquelle une compensation de pression est effectuée dans l'espace intermédiaire entre le sachet intérieur et le contenant extérieur, une ébauche se composant au moins de deux tuyaux étant coextrudée et disposée entre les moitiés ouvertes d'un moule de soufflage et le moule de soufflage étant fermé lorsque l'ébauche présente la longueur nécessaire à la fabrication du contenant, du matériau excédentaire étant écrasé dans la zone de fond du contenant à fabriquer et une traverse en matériau soudé du contenant extérieur étant réalisée, dans laquelle la soudure de fond du sachet intérieur est serrée et maintenue dans le sens axial et l'ébauche est soufflée par un agent de pressurisation pour l'appui contre la paroi du moule de soufflage et est retirée du moule de soufflage, le procédé contenant les étapes suivantes :
a) l'ouverture de contenant est rendue étanche,
b) l'au moins une ouverture de paroi est réalisée du fait que la paroi du contenant extérieur est transpercée ou percée par un foret, un burin ou une aiguille, après la pénétration complète de la paroi du contenant extérieur étant introduit un agent de pressurisation dans l'espace intermédiaire entre le contenant extérieur et le sachet intérieur, **caractérisé par** les étapes suivantes :
c) l'avance du foret, du burin ou de l'aiguille est arrêtée lorsqu'une première valeur seuil de pression prédéterminée est atteinte dans le sachet intérieur,
d) l'introduction de l'agent de pressurisation dans l'espace intermédiaire entre le contenant extérieur et le sachet intérieur est arrêtée lorsqu'une seconde valeur seuil de pression prédéterminée est atteinte dans le sachet intérieur,
e) après la décompression de l'espace intermédiaire entre le contenant extérieur et le sachet intérieur, un agent de pressurisation est introduit par l'ouverture de contenant dans le sachet intérieur afin de reposer le sachet intérieur détaché de la paroi de contenant sur celle-ci.

2. Procédé selon la revendication 1,
**caractérisé en ce**
**que** respectivement au moins une ouverture de paroi est réalisée des deux côtés du plan s'étendant par la soudure de fond et l'axe médian longitudinal du contenant.

3. Procédé selon la revendication 1 ou 2,
**caractérisé en ce**
**que** respectivement un évasement du contenant extérieur est réalisé dans le moule de soufflage dans la zone des ouvertures de paroi, avec un côté intérieur, sur lequel repose le sachet intérieur.

4. Procédé selon l'une quelconque des revendications 1 à 3,
**caractérisé en ce**
**que** les étapes b) à d) sont réalisées individuellement pour chaque ouverture de paroi de telle manière que le sachet intérieur soit tout d'abord détaché d'un côté du plan s'étendant par la soudure de fond et l'axe médian longitudinal et ensuite de l'autre côté.

5. Procédé selon l'une quelconque des revendications 1 à 4,
**caractérisé en ce**
**que** les valeurs seuils de pression sont prises par un capteur de pression qui est agencé dans le sachet intérieur.

6. Procédé selon l'une quelconque des revendications 1 à 5,
**caractérisé en ce**
**qu'**une pression est établie dans le sachet intérieur à la suite de l'étape a), laquelle est inférieure à la pression de l'agent introduit dans l'espace intermédiaire entre le contenant extérieur et le sachet intérieur.

7. Procédé selon l'une quelconque des revendications 1 à 6,
**caractérisé en ce**
**qu'**un volume prédéterminé d'un agent de pressurisation est introduit dans le sachet intérieur et en ce que la pression générée par là-même dans le sachet intérieur est mesurée.

8. Procédé selon la revendication 7,
**caractérisé en ce**
**que** la variation temporelle de la pression intérieure est mesurée afin de détecter une éventuelle chute de pression.

9. Dispositif pour la réalisation des étapes a) à e) de la revendication 1 ainsi que selon l'une quelconque des revendications 2 à 8,
le dispositif présentant un dispositif de prise en charge de contenant, un dispositif d'insertion de contenant avec un porte-pièce, deux dispositifs de forage avec des forets qui contiennent des canaux en liaison avec une source d'air comprimé, un dispositif de mesure de la pression et un dispositif pour une vérification du volume et une vérification de l'étanchéité.
